(19) **Europäisches Patentamt**
**European Patent Office**
**Office européen des brevets**

(11) **EP 2 205 358 B1**

(12) **EUROPEAN PATENT SPECIFICATION**

(45) Date of publication and mention
of the grant of the patent:
**29.02.2012 Bulletin 2012/09**

(51) Int Cl.:
*G01F 1/00* (2006.01)     *B01L 3/02* (2006.01)
*G01N 35/10* (2006.01)

(21) Application number: **08799368.9**

(22) Date of filing: **09.09.2008**

(86) International application number:
**PCT/US2008/075730**

(87) International publication number:
**WO 2009/035981 (19.03.2009 Gazette 2009/12)**

(54) **ASPIRATING AND DISPENSING SMALL VOLUMES OF LIQUIDS**

ANSAUGEN UND ABGABE KLEINER FLÜSSIGKEITSVOLUMEN

ASPIRATION ET DISTRIBUTION DE PETITS VOLUMES DE LIQUIDES

(84) Designated Contracting States:
**AT BE BG CH CY CZ DE DK EE ES FI FR GB GR
HR HU IE IS IT LI LT LU LV MC MT NL NO PL PT
RO SE SI SK TR**

(30) Priority: **10.09.2007 US 971014 P**

(43) Date of publication of application:
**14.07.2010 Bulletin 2010/28**

(73) Proprietor: **ORTHO-CLINICAL DIAGNOSTICS,
INC.
Rochester, New York 14626 (US)**

(72) Inventors:
• **JONES, Robert Seth
Rochester, New York 14616 (US)**

• **DING, Zhong
Pittsford, New York 14534 (US)**
• **HEAVNER, Dave
Fairport, New York 14450 (US)**
• **JAKUBOWICZ, Raymond
Rush, New York 14543 (US)**

(74) Representative: **Tunstall, Christopher Stephen
Carpmaels & Ransford
One Southampton Row
London
WC1B 5HA (GB)**

(56) References cited:
**EP-A- 1 281 441      WO-A-00/63704
DE-A1- 4 423 267     US-A1- 2003 057 391**

**Description**

## BACKGROUND OF THE INVENTION

The present invention relates to aspirating and dispensing small volumes of liquid, particularly in the field of diagnostic assays. In particular, the present invention relates to a metering device that uses small volumes of heated or cooled gas to aspirate and dispense liquids.

Metering devices such as those used in medical diagnostic applications are known in the art. Metering devices, e.g., pipettors, are generally classified as soft systems or hard systems. In a soft system, the liquid being aspirated or metered, is separated from the pump source, e.g., a piston pump, by a bulk volume of air. Soft systems generally work well when metering relatively large volumes of liquids, such as 2 $\mu$L or more. However, soft systems do not adequately aspirate small volumes of liquids. In part, this is because in soft systems, the air volume is typically larger than 200 $\mu$L, which makes the air act as a soft spring due to the compressibility of the air. As a result, fluid viscosity and fluid surface energy have significant effects on metering performance, which makes it difficult to precisely meter small volumes of liquid. In a hard system, the pump, such as a piston pump, drives a column of "working liquid" to aspirate or dispense the liquid being metered. The working liquid and metered liquid are separated by an air gap. Inertia effects, acoustic effects, and degassing phenomena negatively affect system performance. Thus, known systems are not able to adequately dispense small volumes of liquids, particularly to precisely and accurately dispense small volumes of liquids, e.g., in the low- or sub-microliter range.

Another problem for conventional metering devices is that the pump system is typically heavy and bulky in size.

For the foregoing reasons, there is a need for a device, that is capable of more accurately and precisely metering small volumes of liquid than known metering devices. There is also a need for a metering device that is lighter and smaller than known metering devices.

## SUMMARY OF THE INVENTION

The present invention is directed to an apparatus and method that solves the foregoing need for a device for metering small volumes of liquids as claimed. The present invention is also directed to an apparatus that solves the foregoing need for a metering device that is lighter and smaller than known devices.

According to one aspect of the disclosure, there has been provided, a metering device for aspirating and dispensing a liquid which includes: a housing; at least one pumping medium containing chamber contained within the housing; a channel having a proximate end in fluid communication with the at least one chamber and a distal end in fluid communication with an external environment; at least one heat or cold source providing a source of heat or cold to the pumping medium containing chamber; and at least one of a temperature sensor for measuring the temperature inside the chamber. In a preferred embodiment, the heat or cold source is a thermoelectric heater fabricated on a semiconductor substrate, the temperature sensor is fabricated on a semiconductor substrate, a housing at least partially surrounds the semiconductor substrate and electrical circuit board is provided for mounting the housing and electrical leads are provided which extend from the semiconductor substrate to the circuit board.

Another aspect of the disclosure provides a metering device for aspirating and dispensing a liquid. The device includes a housing; a pumping medium (preferably a gas) containing chamber contained within the housing; a channel having a proximate end in fluid communication with the chamber and a distal end in fluid communication with an external environment; a heat or cold source providing a source of heat or cold to the pumping medium containing chamber; and a temperature sensor for measuring the temperature inside the chamber. In a preferred embodiment, the device further includes a pressure sensor for measuring the pumping medium pressure inside the chamber.

Another aspect of the disclosure provides a method for aspirating and dispensing a liquid. The method includes: providing a metering device for aspirating and dispensing a liquid that includes a housing; a pumping medium (preferably a gas) containing chamber contained within the housing, the chamber; a channel having a proximate end in fluid communication with the chamber and a distal end in fluid communication with an external environment; a heat or cold source providing a source of heat or cold to the pumping medium containing chamber; and a temperature sensor for measuring the temperature inside the chamber; providing a source of liquid to be aspirated; bringing the distal end of the channel into contact with the liquid; cooling the pumping medium containing chamber with the heat or cold source to aspirate a first volume of liquid into the device; and heating the pumping medium containing chamber to dispense a second volume of liquid out of the device.

Yet another aspect of the disclosure provides a method of determining the presence or amount of one or more analytes in a sample. The method includes: providing the metering device as described above; providing a sample in a sample container; aspirating a selected amount of sample from the container; dispensing the sample on a test element; optionally providing one or more reagents; incubating the receiving elements; and taking measurement of the samples to determine the presence or amount of the analyte in the sample.

According to yet another aspect of the disclosure, there has been provided a diagnostic analyzer. The analyzer includes: a liquid dispense or aspirating station comprising the metering device described above; a source of sample and test elements; optionally a source of reagents; an incubator; and a measurement device to analyze a sample.

Further objects, features and advantages of the present invention will be apparent to those skilled in the art from detailed consideration of the preferred embodiments that follow.

## BRIEF DESCRIPTION OF THE DRAWINGS

Figure 1 shows a metering device according to a preferred embodiment of the present invention.
Figure 2 shows a metering device according to another preferred embodiment of the present invention.
Figure 3 shows a metering device according to another preferred embodiment of the present invention.
Figure 4 shows a schematic cross sectional view of a metering device according to another preferred embodiment of the invention.
Figures 5a-5d show various schematic views of a miniaturized metering device according to another preferred embodiment of the invention.
Figures 6a-6d show a schematic cutaway view and cross sectional view of a miniaturized metering device mounted on an electronic circuit board according to another embodiment of the invention.

## DETAILED DESCRIPTION OF PREFERRED EMBODIMENTS

One aspect of the present invention is a metering device which utilizes a pumping medium volume change corresponding to temperature change to aspirate and dispense small volumes, e.g., small- or sub-microliters, of liquid. The amount of liquid that can be aspirated or dispensed is generally in the range of about 0.2 $\mu$L to 5 $\mu$L, preferable $\leq$ 2 $\mu$L, $\leq$ 1$\mu$L, $\leq$ 0.5 $\mu$L, down to 0.2 $\mu$L and even down to 0.05 $\mu$L. The metering device includes at least one chamber that contains a pumping medium, such as air or any other suitable gas, such as inert gas, like $CO_2$, $N_2$, or the noble gases such as Ar, He, etc. Other pumping mediums that may be used can include solids with high thermal coefficients of expansion such as metals or liquids, such as ethanol. The metals made be in the form of a fluent solid, e.g., beads, granules, etc. From herein, the invention will be described with respect to air, however, any of the aforementioned pumping mediums, particularly gases may be used. The chamber is in fluid communication with a channel that is also in fluid communication with the external environment. The "external environment" includes the environment outside of the chamber and channel, such as ambient atmosphere or the liquid to be aspirated or dispensed. The chamber is only open to the external environment through the channel. Preferably, there is only a single orifice in the chamber that communicates with the external environment. Of course there may be orifices to allow communication with monitoring devices, such as temperature or pressure sensors.

A heating or cooling source is provided in thermal communication with at least the chamber of the metering device. While the heating or cooling source is generally only in thermal communication with the chamber, there may be instances where the source is also in thermal communication with a part or all of the channel. As discussed more in-depth below, the present invention relies on a temperature differential generated within the chamber which corresponds to a volume change. The volume change may be generated by a heat source which heats the gas to a first temperature with the corresponding volume change resulting as the gas in the chamber cools to ambient by unassisted heat transfer with the external environment and the pressure lowers accordingly. Thus, no separate cooling source would be required. Likewise, the volume change may be generated by a cooling source which cools the gas with the corresponding volume change resulting as the gas in the chamber heats to ambient by unassisted heat transfer with the external environment. Thus, no separate heating source would be required. However, in a preferred embodiment, both a heating and cooling source are provided to provide a relatively quick heating and cooling relative to unassisted heat transfer.

The heating and/or cooling source can be any known in the art. For example thermoelectric cooling or heating based on the Peltier effect such as a thermoelectric heat pump, which can either heat, cool or do both. Another heating and/or cooling source can be a liquid that is externally heated and/or cooled and is provided to the metering device via tubing or piping.

The channel provides the fluid communication between the liquid to be aspirated or dispensed and the air chamber. The housing which defines the air chamber can include any suitable material such as plastic, metal, ceramics, etc, with thermal isolating materials such as plastics being preferred. The channel can be a non-disposable extension of the metering device, or a separate disposable extension that fits onto the metering device, preferably a frictional fit. In another embodiment, the channel includes both disposable and non-disposable parts, to advantageously fit into an elongated tube. For example, the non-disposable portion can be an elongated extension of the metering device housing to facilitate insertion into a narrow liquid container, such as a sample containing tube used in diagnostic analyzers. One advantage of a relatively long and narrow channel in the metering device would be that sample liquid temperature has almost no effects on temperature inside chamber. The disposable part may be in the form of a metering tip. The metering tip could be the only part of the channel that contacts liquid, thus preventing contamination.

The channel is preferably a capillary tube of small cross-sectional diameter. Capillary tubes can be fabricated of a number of materials including, but not limited to, metal, glass, plastic, quartz, ceramic, and various silicates. The material of the non-disposable channel can be plastic or metal, while the material of the disposable channel is preferably plastic to minimize heat transfer between the liquid and the air. The capillary outside diameter at bottom is preferably smaller than 1 mm to minimize meniscus effects at liquid detachment after aspiration.

As described above, a significant problem in known metering devices is the inability to precisely and accurately aspirate and dispense small volumes of liquid. Problems with metering small volumes of liquid include capillary effects and viscosity effects which are dependent on the properties of the liquid. Thus, different liquids will exhibit different properties, such as capillary effects and viscosity effects.

In the present invention, it has been discovered to make the metering device essentially independent of or insensitive to fluid properties. Namely, a significant feature of the present invention is providing a relatively small air volume inside the metering device. The air volume is generally $\leq 50$ $\mu$L, preferably $\leq 40$ $\mu$L, more preferably $\leq 30$ $\mu$L, even more preferably $\leq 25$ $\mu$L and most preferably around 20 $\mu$L or 15 $\mu$L or 10 $\mu$L or 5 $\mu$L. The air volume includes both the chamber and the channel, however, the volume of the channel will generally be small relative to the chamber. As shown below, using a small volume of air makes the system essentially independent of liquid properties. This is believed to be due to the relative incompressibility of a small volume of air compared to a volume that is much larger, for example, on an order of magnitude larger. This causes the air to act as a relatively stiff air spring, less susceptible to other forces such as capillary pressure. In addition, the small volume of air also enhances thermal transfer efficiency between the air and the heating or cooling source in the metering device, especially when the contacting surface area between air and the heating or cooling surface inside the chamber is large compared to the chamber height. The channel is typically long with small cross sectional area to act as insulator between aspirated liquid and the chamber air.

To demonstrate the negligible effects fluid properties have on the present invention, the following example is provided. A metering device as described above has the distal end of the channel inserted into a liquid to be metered. The air in the at least one chamber of metering device is cooled. After decreasing the temperature, air volume inside the chamber and channel contracts, creating a negative pressure to aspirate or pull in liquid. Liquid flows in and reaches equilibrium when the pressure in the chamber and conduit is the same as ambient, e.g. atmospheric (neglecting gravity and capillary effects for now).

The ideal gas law relates air pressure ($p$), volume ($V$) and temperature ($T$) by $pV = nRT$. After reaching equilibrium (at the same constant pressure as ambient), the air volume change is related with temperature by

$$\frac{V_1}{V_2} = \frac{T_1}{T_2} .$$

As temperature changes from $T_1$ to $T_2$, the air volume increases can be calculated by

$$\Delta V = V_2 - V_1 = \left(\frac{T_2}{T_1} - 1\right) V_1 \qquad (1)$$

Assuming $T_1$ = 25 °C (or 298 K, room temperature) and $V_1$ = 20 $\mu$L, to generate a 0.2 $\mu$L air volume increase, the temperature $T_2$ should be increased to 27.98 °C. To generate 0.2 $\mu$L air volume decrease, the temperature $T_2$ should be decreased to 22.02 °C.

Assuming the volume is held as a constant, the same temperature change can generate a pressure change and is calculated by

$$\Delta p = p_2 - p_1 = \left(\frac{T_2}{T_1} - 1\right) p_1 .$$

For the 2.98 °C temperature change as needed for a 0.2 $\mu$L volume change in a 20 $\mu$L air volume, the pressure change is 10132.5 dynes/cm$^2$. This relatively large thermal pressure change results from the small air volumes involved.

However, if $V_1$ = 200 $\mu$L, a 0.2 $\mu$L air volume increase needs a temperature change of only 0.298 °C, which is difficult to achieve accurately. The resulting pressure change is 10 times smaller than the case when $V_1$ = 20 $\mu$L, which may result in the system having difficulties overcoming capillary effects.

To demonstrate the effects of capillary pressure on a preferred embodiment of the present invention, a conduit having radius of 0.5 mm is provided. Assuming a liquid having a surface tension of 70 dynes/cm (high end for a liquid) the largest possible capillary pressure is generated at end of the conduit outlet when the liquid forms a half sphere and is

$$p = \frac{2\sigma}{r} = \frac{2 \times 70}{0.05} = 2800 \quad \text{dynes/cm}^2 .$$

This is relatively small (~27.6%) compared with thermal pressure as calculated above. Gravity effects are even smaller given the small volumes of liquid involved. Surface tensions of most biofluids are in the range between 40 and 55 dynes/cm. The pressure variation due to surface tension is within $p = \dfrac{2\Delta\sigma}{r} = \dfrac{2 \times 15}{0.05} = 600$ dynes/cm$^2$. This is only about 6% of thermal pressure r 0.05 calculated above. Therefore, one can use the previous idealized model for the present invention and therefore the present invention provides a metering device that is relatively insensitive to liquid properties. This is a significant advantage over conventional metering devices. Thus, the preferred temperature change inside the air chamber would be on the order of 1 to 30°C, 1 to 10 °C, preferably $\geq$ 1° C, preferably $\geq$ 2° C, and preferably $\geq$ 3°C.

The thermal pump of the present invention has shown excellent performance for aspirating fluid with volumes lower than 1 $\mu$L as shown in initial tests as shown in Table 2 below. In some embodiments, it is desirable to have the thermal pump working in a broader range of fluid volumes, particularly in the lower end of the range (e.g., from 0.05 $\mu$L to 1 $\mu$L), and with an operational temperature difference which is larger than 2.5°C to allow better control of temperature to minimize errors caused by temperature imprecision and inaccuracy. However, the temperature change should not be too large due to thermal considerations, efficiency and limitations on the heating ability of the heating source. At the mean time, the initial air volume inside cavity should be less than 20 $\mu$L so that the system is stiff enough and to minimize the total air volume in the system.

Table 1 below illustrates a non-limiting example of the calculated air volume change (Delta V) as function of temperature change (Delta T) and initial air volume inside the chamber of a thermal pump. To produce the volume differences a probe is preheated to temperature to 50°C and then allowed to cool. As the probe cools, the air volume inside the probe contracts from the initial amount shown across the top of Table 1 to the initial value minus the Delta V for each Delta T.

**Table 1**

| Initial Temperature | | | | | |
|---|---|---|---|---|---|
| C | 50 | | | | |
| Kelvin | 323 | | | | |

| Air Volume | 5 | 10 | 15 | 20 | 25 |
|---|---|---|---|---|---|
| Delta T | | Delta V | | | |
| 2.5 | 0.039 | 0.077 | 0.116 | 0.155 | 0.193 |
| 5 | 0.077 | 0.155 | 0.232 | 0.310 | 0.387 |
| 7.5 | 0.116 | 0.232 | 0.348 | 0.464 | 0.580 |
| 10 | 0.155 | 0.310 | 0.464 | 0.619 | 0.774 |
| 12.5 | 0.193 | 0.387 | 0.580 | 0.774 | 0.967 |
| 15 | 0.232 | 0.464 | 0.697 | 0.929 | 1.161 |
| 17.5 | 0.271 | 0.542 | 0.813 | 1.084 | 1.354 |
| 20 | 0.310 | 0.619 | 0.929 | 1.238 | 1.548 |
| 22.5 | 0.348 | 0.697 | 1.045 | 1.393 | 1.741 |
| 25 | 0.387 | 0.774 | 1.161 | 1.548 | 1.935 |

(continued)

| | | | | | |
|---|---|---|---|---|---|
| 27.5 | 0.426 | 0.851 | 1.277 | 1.703 | 2.128 |
| 30 | 0.464 | 0.929 | 1.393 | 1.858 | 2.322 |

For example, for a 5 μL initial air volume inside the chamber, if the temperature changes in the range between 2.5 and 30°C, the volume change is between 0.039 to 0.464 μL. With a larger initial air volume inside the chamber, a greater air volume change can be achieved to aspirate more liquid with the same temperature change. However, it cannot perform as well in aspirating smaller volumes of liquid (e.g., less than 0.05 μL).

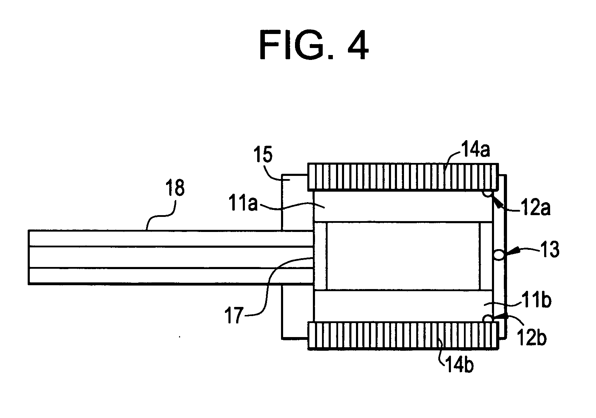

Accordingly, a preferred embodiment provides multiple thermal chambers preferably each with its own heat/ cooling source to form a thermal metering device that can operate independently to achieve the purpose of aspirating fluid from 0.05 to 1 μL with temperature changes from 2.5 to 30°C. Figure 4, described more fully later, shows the idea of using double chamber.

As an example, in Figure 4, assume each chamber has an initial air volume of 5 μL, only the left cavity needs to be operating with a temperature change if aspirating liquid volume is less than 0.4 μL. If the desired aspiration volume is more than 0.4 μL, the right and left cavities can be operated simultaneously or sequentially, with simultaneous operation providing a fast aspirate or dispense. The combined chambers will aspirate fluid up to 0.92 μL if the temperature decreases by 30°C in each. Any suitable number of chambers can be used to achieve even a greater range of aspirated volumes, for example, three or four or more chambers.

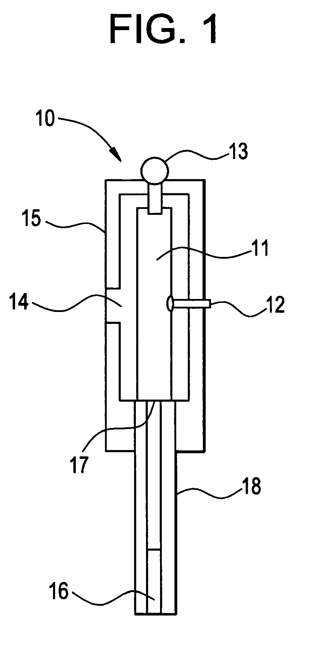

Now reference will be made to the preferred embodiments shown in the figures. Figure 1 shows a metering device 10 according to a preferred embodiment of the invention. A chamber 11 containing air with a pre-defined geometry is mounted with temperature sensor 12 and optionally a pressure sensor 13. While not required, a pressure sensor provides a means to monitor metering errors, such as a plugged tip or air bubbles as is known in the art. In addition, the pressure could be used to increase precision and accuracy of a metered volume by calculating the aspirated volume combined with measured temperature by using $V = nRT/p$, where R is the ideal gas constant. The chamber 11 is surrounded by a thermal electric unit 14, e.g., thermoelectric heat pump and is enclosed inside a housing 15 that is preferably constructed of an insulating material (such as plastic). Both the chamber 11 and the housing 15 form a structure at one end that serves as a metering probe to support a capillary 16 (or any other type of small tip). If the housing also encloses the thermal electric heater there should be sufficient ventilation to the ambient atmosphere to provide more effective cooling of the chamber. The tip and the chamber are in fluid communication via orifice 17. Of course, the chamber and channel can be in a unitary form and made of the same material and even the same shape. For example, in those applications where the channel is in the shape of a disposable metering tip, the chamber and the channel can be in the shape of the disposable tip. In this instance, the chamber would be before the channel in the direction of the fluid being metered and the thermal electric unit would at least partially surround the chamber portion of the tip.

In one preferred operation, the pressure sensor obtains the ambient pressure, and the temperature sensor detects the temperature. Then the tip is lowered to enter a liquid container. The pressure sensor measures the pressure again to detect if capillary effects have pulled any liquid into the capillary, and the temperature sensor records the new temperature. The new pressure could be a function of liquid involved since capillary effects are different for different samples (liquids) as described above.

A calculation based on the ideal gas law is performed to determine how much liquid entered at this time and is compared with the intended aspiration volume. Then the thermal electric unit decreases or increases the temperature based on the calculation and the targeted aspiration volume. While monitoring pressure to take into account capillary effects is preferable, the method of metering the liquid can be carried out by temperature measurement alone.

When aspiration is done, the tip is withdrawn from the liquid container. For dispense, a temperature increase is performed to expel the liquid inside the capillary. If mixing is necessary, cycles of cooling and heating can be performed before dispensing the liquid.

In another preferred operation, the chamber is warmed up to the specified temperature before the probe is inserted into the liquid to be aspirated. The air inside the chamber expands when it is warmed. After insertion into the liquid, the air inside the chamber is cooled to specified temperature to aspirate specified amount of liquid. In this way, the aspiration process is faster due to faster heat transfer.

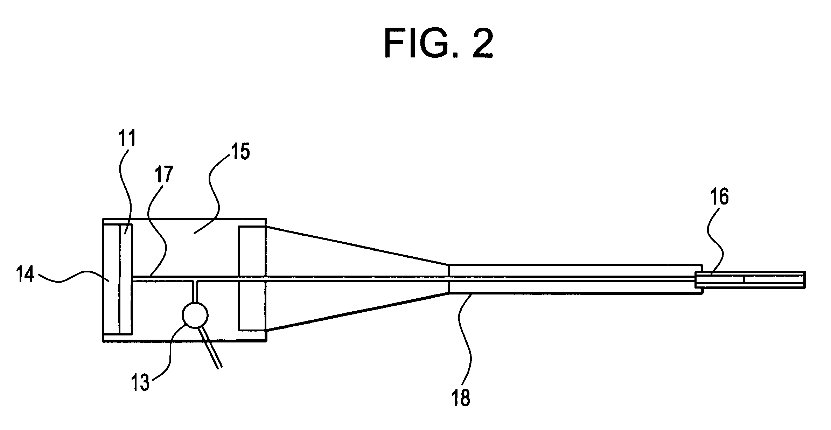

Figure 2 shows another embodiment of the present invention. In this embodiment, the channel includes both a non-disposable (inside the plastic housing 15 and an extension 18) and a disposable portion 16. A long structure with a thin channel (e.g., capillary size) is used to connect the disposable capillary tip and the air inside. The long channel enables the pump to reach liquids inside narrow containers, such as sample inside a deep sample tube. While the construction of the plastic housing 15 is preferably plastic, the extension 18 can be a suitable material such as plastic or metal.

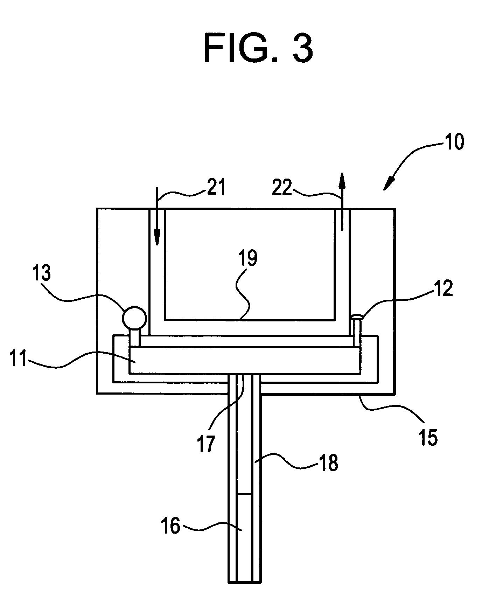

Figure 3 shows yet another way to create the temperature change inside the air chamber 11. In this embodiment, the temperature inside the chamber 11 is controlled by a liquid heat exchanger 19. Fluid which has been externally heated or cooled enters the metering device via conduit 21. After heat exchange is effected, the fluid exits via conduit 22 where it may return to the external source for additional heating or cooling.

Figure 4 illustrates another embodiment according to a preferred embodiment. In this embodiment, multiple chambers 11 a and 11 b are employed to broaden the range of volume (particularly the lower part of the range) that can be aspirated and/or dispensed as described above. In this embodiment, the extension 18 is in fluid communication with both chambers 11 a and 11 b. Also included are heat or cold sources, such as thermoelectric heat pumps 14a and 14b, which heat their respective chambers. These heat pumps are preferably independently heated or cooled, such that only one chamber will aspirate and/or dispense fluid when heated or cooled. In a particularly preferred embodiment one heat or cold source is provided for each chamber. In a multiple chamber embodiment, one of the chambers can be significantly larger than the other chamber. The larger chamber would be for dispensing larger amount of liquid, whereas the smaller chamber would be for smaller amounts of liquid and could be used to fine tune the total amount of liquid dispensed.

Table 2 shows experimental data collected using the present invention. More specifically, a thermal pumping metering probe having an air as the pumping medium was used with water. The volume of the air chamber was about 25 $\mu$L. Two set of aspirations were carried out. The first (labeled "Delta T1") had a Delta T of 10°C, whereas the second set (labeled "Delta T2") has a Delta T of 5°C. Ten aspirations for each set were carried out. In Delta T1, the average aspiration volume obtained by measuring the geometry of the liquid meniscus was 0.84 $\mu$L, with a standard (SD) of 0.03 $\mu$L and a variation coefficient of (CV%) of 3.9%. In Delta T2, the average aspiration was 0.39 $\mu$L, with a SD of 0.02 and a CV of 5.8%. As shown by the SD and CV, the precision and reproducibility of the results was excellent.

**Table 2**

| Delta T (°C) | 10 | 5 |
|---|---|---|
| Start T (°C) | 40 | 40 |
| End T (°C). | 30 | 35 |
| Reps | Delta T1 | Delta T2 |
| 1 | 0.80 | 0.38 |
| 2 | 0.81 | 0.38 |
| 3 | 0.82 | 0.41 |
| 4 | 0.81 | 0.41 |
| 5 | 0.86 | 0.38 |
| 6 | 0.85 | 0.38 |
| 7 | 0.86 | 0.39 |
| 8 | 0.89 | 0.45 |
| 9 | 0.88 | 0.39 |
| 10 | 0.87 | 0.38 |
| Average Volume ($\mu$L) | 0.84 | 0.39 |
| SD | 0.03 | 0.02 |
| CV% | 3.9% | 5.8% |

Thermal expansion of metals may be taken into consideration, although the volume change in chamber is very small due to metal thermal deformation. Other advantages of the metering device of the present invention is the small compact size, which allow the device to be used in tight configurations, for example, on a point of care analyzer. The metering device can be combined to form a plurality of metering devices to allow multiple aspiration/dispense. Also, the lack of moving parts makes the metering device desirable from a service standpoint.

The metering device can be used in a diagnostic analyzer to determine the amount of one or more analytes in a sample. An "analyte" is any molecule or molecules that are to be detected and/or quantified in a sample. Preferred target analytes include biomolecules such as nucleic acids, antibodies, proteins, sugars, and the like. The sample can include any bodily fluid, such as blood, plasma, serum, urine, spinal fluid, etc.

Such diagnostic analyzer systems typically include a supply of consumables such as test elements. A test element includes any reaction vessel in which optionally at least one reagent has been pre-supplied, for example so-called dried slide test elements such as are described in, e.g., U.S. Pat. No. 3,992,158; or a cup or well having a cavity pre-coated with one or more anti-bodies, such as is described in U.S. Pat. No. 5,441,895, or a cuvette to which reagent is added. Other types of diagnostic analyzers include point of care (POC) instruments which typically include lateral flow strips. Such instruments and strips are described in U.S. Patent No. 7,416,700 and U.S. Published Patent Application No. 2005/0042766. The analyzers also include a plurality of sensiometric or measuring devices including electrometers, reflectometers, luminescence, light transmissivity, photon detection, and the like for measuring specific aspects of the sample, incubator(s) for heating the samples, a supply of reagents, and a plurality of reagent delivery subsystems, all of which can be accessed and used at any time.

For example, known analyzers include "dry" chemistry systems which typically include a sample supply that includes a number of dry slide elements, a metering/transport mechanism, and an incubator having a plurality of test read stations. A quantity of sample is aspirated using the metering device. A quantity of sample from the tip is then metered (dispensed) onto a dry slide element that is loaded into the incubator. The slide element is incubated, and a measurement such as optical or other reads are taken for detecting the presence or concentration of an analyte.

Another known analyzer includes a "wet" chemistry system which utilizes a reaction vessel such as a cuvette, into which quantities of patient sample, at least one reagent fluid, and/or other fluids are combined for conducting an assay. The assay also is incubated and tests are conducted for analyte detection. The "wet" chemistry system also includes a metering mechanism to transport patient sample fluid from the sample supply to the reaction vessel. Still another analyzer that can be used with the present invention is the so-called point of care "POC" analyzers that can be used when time to results is important, such as in an emergency room setting or in a doctor's office.

Examples of known diagnostic analyzers include immunodiagnostic analyzers such as the Vitros® ECi immunodiagnostic analyzer, or clinical chemistry analyzers such as the Vitros® 5,1 FS, both sold by Ortho-Clinical Diagnostics, Inc. All such analyzers are collectively called diagnostic analyzers. Representative systems are disclosed, for example, in U.S. Published Patent Application No. 2003/0026733 and in U.S. Application No. 11/091,283 filed March 28, 2005, both of which are incorporated herein by reference in their entireties.

The metering device according to the present invention aspirates a selected amount of sample from a sample container, such as a test tube. The metering device dispenses samples onto test elements. The test element includes any reaction vessel in which optionally at least one reagent has been pre-supplied, for example so-called dried slide test elements such as are described in, e.g., U.S. Pat. No. 3,992,158; or a cup or well having a cavity pre-coated with one or more anti-bodies, such as is described in U.S. Pat. No. 5,441,895, a cuvette to which reagent is added, or a lateral flow test strip to which a sample has been added as described above.

The same or another metering device can also optionally add one or more reagent from a reagent source, such as reagent bottles. The test elements are then incubated for a selected amount of time. After incubation, the receiving elements are transferred to a measuring station (or may stay within the incubator if the measuring station is located therein), where a measurement is taken of the sample to determine the presence of amount of the one or more analytes in the sample.

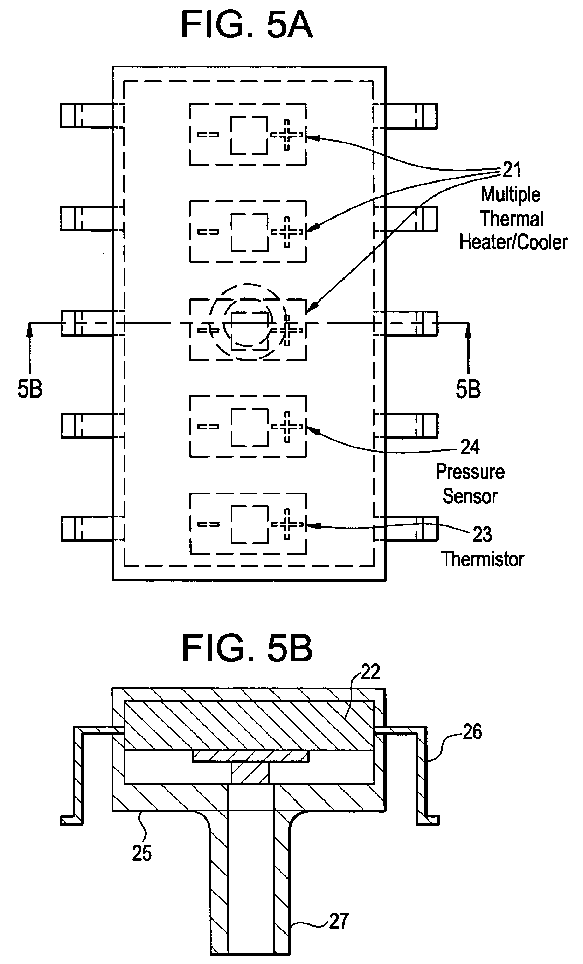

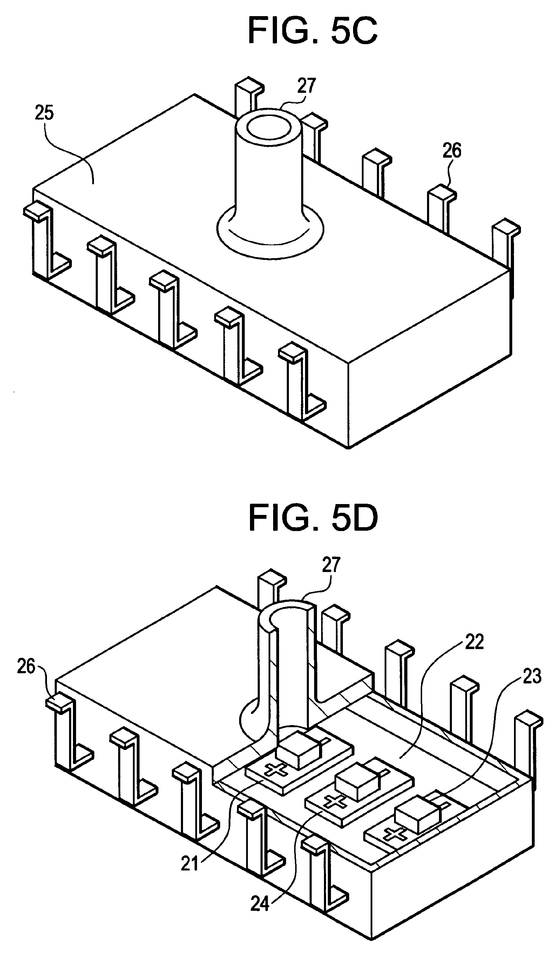

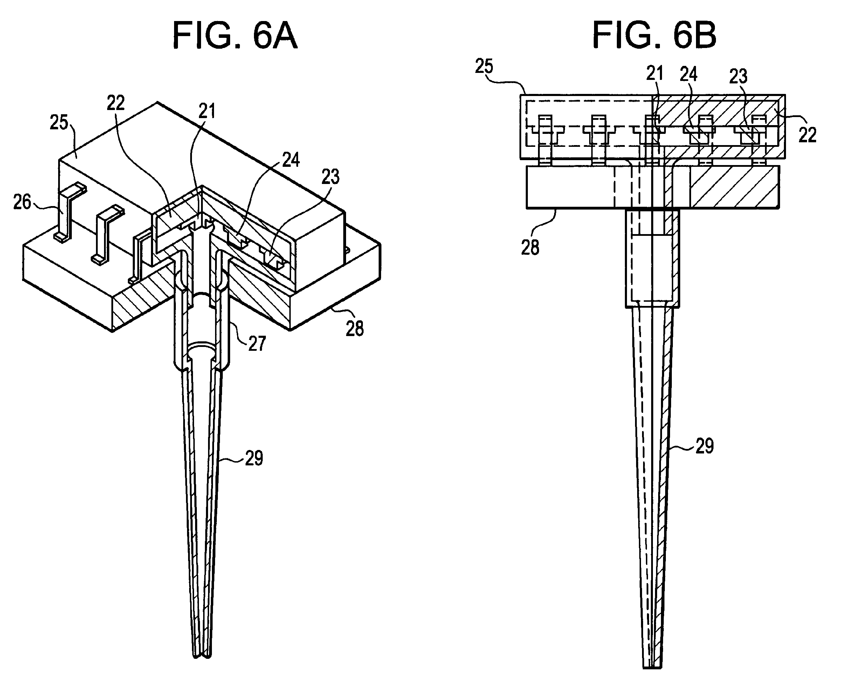

According to another embodiment of the present invention as exemplified in Figures 5 and 6, metering devices can be fabricated and miniaturized to the extent that it can be included as a component of a printed circuit board and used in miniature applications, such as POC as described above or a "lab on a chip." More specifically, one or more heating/cooling sources 21 (e.g., a peltier effect thermoelectric heat pump) can be fabricated on a semiconductor substrate, along with temperature sensor(s) 23, such as a thermistor and/or pressure sensor(s) 24 using well known semiconductor fabrication techniques such as described in U.S. Patent Nos. 5,714,791, 6,700,174, and 7,307,328, and WO 97/13283, all of which are incorporated by reference in their entireties. Alternatively, each of the devices, e.g., thermistor, pressure sensor, thermoelectric heat pump, can be separately fabricated and mounted on a substrate such as a ceramic substrate. The substrate along with the thermoelectric heat pump and sensors are enclosed with a housing, which forms the pump chamber containing the pumping medium (e.g., air) as described above. The housing 25 can be made of any suitable material, e.g., plastic, as described above and has an extension extending from the housing body. Electrical leads 26 connected to the sensors or thermoelectric heat pump(s) extend through the housing and are adapted to be attached onto the interface circuit board. Depending on how the tip is to be oriented, the extension 27 may also extend through the circuit board 28 and have the tip 29 attached to the extension under the circuit board.

The methods, particularly the heating or cooling, according to the present invention can be implemented by a computer program, having computer readable program code, interfacing with the computer controller of the analyzer as is known in the art.

It will be apparent to those skilled in the art that various modifications and variations can be made to the compounds, compositions and processes of this invention. Thus, it is intended that the present invention cover such modifications and variations, provided they come within the scope of the appended claims and their equivalents.

**EP 2 205 358 B1**

## Claims

1. A metering device (10) for aspirating and dispensing a liquid comprising:

   a housing (15);
   two or more pumping medium containing chambers (11 a; 11 b) contained within the housing;
   a channel having a proximate end in fluid communication with each of the two or more chambers and a distal end in fluid communication with an external environment;
   an independently controllable heat or cold source (14a; 14b) associated with each of the two or more chambers for providing a source of heat or cold to the two or more chambers; and
   at least one of a temperature sensor (12) disposed within each of the two or more chambers for measuring the temperature inside the chamber.

2. A device as claimed in claim 1, wherein each chamber has a volume of $\leq 10\ \mu L$ or a volume of $\leq 5\ \mu L$.

3. A device as claimed in claim 1, wherein the hot or cold source comprises a thermoelectric heat pump fabricated on a semiconductor substrate.

4. A method for aspirating and dispensing a liquid comprising:

   providing a metering device (10) for aspirating and dispensing a liquid that includes

   a housing (15);
   two or more pumping medium containing chambers (11a; 11b) contained within the housing;
   a channel having a proximate end in fluid communication with each of the two or more chambers and a distal end in fluid communication with an external environment;
   an independently controllable heat or cold source (14a; 14b) associated with each of the two or more chambers providing a source of heat or cold to the two or more chambers; and
   a temperature sensor (12) disposed within each of the two or more chambers for measuring the temperature inside the chamber; providing a source of liquid to be aspirated;

   bringing the distal end of the channel into contact with the liquid;
   cooling at least one of the two or more chambers with the heat or cold source to aspirate a first volume of liquid into the device;
   heating at least one of the two or more chamber to dispense a second volume of liquid out of the device.

5. A method according to claim 4, further comprising a pressure sensor (13) for measuring gas pressure inside the two or more chambers.

6. A method according to claim 4, wherein the external environment is ambient atmospheric pressure or where the external environment is the liquid to be aspirated and dispensed.

7. A method according to claim 4, wherein the volume of gas in the two or more chambers and channel is $\leq 50\ \mu L$, $\leq 40\ \mu L$, $\leq 30\ \mu L$, $\leq 20\ \mu L$ or about $20\ \mu L$.

8. A method according to claim 4, wherein the volume of liquid is in the range of about 0.2 to $5\ \mu L$.

9. A method according to claim 4, wherein the volume of liquid is less than about $\leq 5\ \mu L$ or less than about $\leq 2\ \mu L$.

10. A method as claimed in claim 4, wherein the temperature differential is at least $\geq 1°\,C$, at least $\geq 2°\,C$, or at least $\geq 3°C$.

11. A method of determining the presence or amount of one or more analytes in a sample, comprising the steps of:

    providing the metering device as claimed in claim 1;
    providing a sample in a sample container;
    aspirating a selected amount of sample from the container;
    dispensing the sample on a test element;
    optionally providing one or more reagents;

incubating the receiving elements; and

taking measurement of the samples to determine the presence or amount of the analyte in the sample, wherein the test elements are one or more of a dry slide element, an optically transparent cuvette, or a streptavidin coated microwell.

**Patentansprüche**

1. Dosiervorrichtung (10) zum Aspirieren und Abgeben einer Flüssigkeit, wobei die Vorrichtung Folgendes umfasst:

ein Gehäuse (15);

zwei oder mehrere Pumpmedium enthaltende Kammern (11a; 11b), die sich innerhalb des Gehäuses befinden;

einen Kanal mit einem proximalen Ende, das in Fluidkommunikation mit jeder der zwei oder mehreren Kammern steht, und mit einem distalen Ende, das in Fluidkommunikation mit einer externen Umgebung steht;

eine unabhängig kontrollierbare Wärme- oder Kältequelle (14a; 14b), die jeder der zwei oder mehreren Kammern zugeordnet ist, um eine Wärme- oder Kältequelle für die zwei oder mehreren Kammern bereitzustellen; und

mindestens einen eines Temperatursensors (12), der sich innerhalb einer jeden der zwei oder mehreren Kammern befindet, um die Temperatur im Innern der Kammer zu messen.

2. Vorrichtung nach Anspruch 1, bei der jede Kammer ein Volumen von ≤ 10 µL oder ein Volumen von ≤ 5 µL hat.

3. Vorrichtung nach Anspruch 1, bei der die Wärme- oder Kältequelle eine auf einem Halbleitersubstrat aufgebrachte thermoelektrische Wärmepumpe umfasst.

4. Verfahren zum Aspirieren und Abgeben einer Flüssigkeit, das Folgendes umfasst:

Bereitstellen einer Dosiervorrichtung (10) zum Aspirieren und Abgeben einer Flüssigkeit, wobei die Vorrichtung Folgendes beinhaltet:

ein Gehäuse (15);

zwei oder mehrere Pumpmedium enthaltende Kammern (11a; 11b), die sich innerhalb des Gehäuses befinden;

einen Kanal mit einem proximalen Ende, das in Fluidkommunikation mit jeder der zwei oder mehreren Kammern steht, und mit einem distalen Ende, das in Fluidkommunikation mit einer externen Umgebung steht;

eine unabhängig kontrollierbare Wärme- oder Kältequelle (14a; 14b), die jeder der zwei oder mehreren Kammern zugeordnet ist, um eine Wärme- oder Kältequelle für die zwei oder mehreren Kammern bereitzustellen; und

einen Temperatursensor (12), der sich innerhalb einer jeden der zwei oder mehreren Kammern befindet, um die Temperatur im Innern der Kammer zu messen;

Bereitstellen einer Quelle für zu aspirierende Flüssigkeit;

Inkontaktbringen des distalen Endes des Kanals mit der Flüssigkeit;

Kühlen von mindestens einer der zwei oder mehreren Kammern mit der Wärme- oder Kältequelle, um ein erstes Flüssigkeitsvolumen in die Vorrichtung zu aspirieren; und

Erwärmen von mindestens einer der zwei oder mehreren Kammern, um ein zweites Flüssigkeitsvolumen aus der Vorrichtung abzugeben.

5. Verfahren nach Anspruch 4, das weiterhin einen Drucksensor (13) umfasst, um Gasdruck im Innern der zwei oder mehreren Kammern zu messen.

6. Verfahren nach Anspruch 4, bei dem die externe Umgebung Atmosphärenumgebungsdruck ist, oder bei dem die externe Umgebung die zu aspirierende und abzugebende Flüssigkeit ist.

7. Verfahren nach Anspruch 4, bei dem das Gasvolumen in den zwei oder mehreren Kammern und im Kanal ≤ 50 µL, ≤ 40 µL, ≤ 30 µL, ≤ 20 µL oder etwa 20 µL beträgt.

8. Verfahren nach Anspruch 4, bei dem das Flüssigkeitsvolumen im Bereich von etwa 0,2 bis 5 µL liegt.

**9.** Verfahren nach Anspruch 4, bei dem das Flüssigkeitsvolumen weniger als etwa ≤ 5 µL oder weniger als etwa ≤ 2 µL beträgt.

**10.** Verfahren nach Anspruch 4, bei dem die Temperaturdifferenz mindestens ≥ 1°C, mindestens ≥ 2°C oder mindestens ≥ 3°C beträgt.

**11.** Verfahren zur Bestimmung des Vorhandenseins oder der Menge von einem oder mehreren Analyten in einer Probe, wobei das Verfahren die folgenden Schritte umfasst:

Bereitstellen der Dosiervorrichtung nach Anspruch 1;
Bereitstellen einer Probe in einem Probebehältnis;
Aspirieren einer ausgewählten Probenmenge aus dem Behältnis;
Abgeben der Probe auf ein Testelement;
Wahlweises Bereitstellen von einem oder mehreren Reagenzien;
Inkubieren der Aufnahmeelemente; und
Messen der Proben, um das Vorhandensein oder die Menge des Analyten in der Probe zu bestimmen, wobei es sich bei den Testelementen um ein oder mehrere trockene Objektträgerelemente, optisch transparente Küvetten oder mit Streptavidin beschichtete Microwells handelt.

**Revendications**

**1.** Dispositif doseur (10) destiné à aspirer et à distribuer un liquide, comportant :

un boîtier (15) ;
au moins deux chambres (11a ; 11b) contenant un milieu de pompage, contenues dans le boîtier ;
un conduit présentant une extrémité proximale en communication fluidique avec chacune desdites au moins deux chambres et une extrémité distale en communication fluidique avec un environnement externe ;
une source chaude ou froide (14a ; 14b) commandable indépendamment associée à chacune desdites au moins deux chambres pour constituer une source de chaleur ou de froid vers lesdites au moins deux chambres ; et
au moins un capteur (12) de température disposé à l'intérieur de chacune desdites au moins deux chambres pour mesurer la température à l'intérieur de la chambre.

**2.** Dispositif selon la revendication 1, chaque chambre présentant un volume ≤ 10 µl ou un volume ≤ 5 µl.

**3.** Dispositif selon la revendication 1, la source chaude ou froide comportant une pompe à chaleur thermoélectrique façonnée sur un substrat semiconducteur.

**4.** Procédé d'aspiration et de distribution d'un liquide, comportant les étapes consistant à :

mettre en place un dispositif doseur (10) destiné à aspirer et à distribuer un liquide, comportant :

un boîtier (15) ;
au moins deux chambres (11a ; 11b) contenant un milieu de pompage, contenues dans le boîtier ;
un conduit présentant une extrémité proximale en communication fluidique avec chacune desdites au moins deux chambres et une extrémité distale en communication fluidique avec un environnement externe ;
une source chaude ou froide (14a ; 14b) commandable indépendamment associée à chacune desdites au moins deux chambres pour constituer une source de chaleur ou de froid vers lesdites au moins deux chambres ; et
un capteur (12) de température disposé à l'intérieur de chacune desdites au moins deux chambres pour mesurer la température à l'intérieur de la chambre ;

mettre en place une source de liquide à aspirer ;
amener l'extrémité distale du conduit au contact du liquide ;
refroidir au moins une desdites au moins deux chambres au moyen de la source chaude ou froide pour aspirer un premier volume de liquide dans le dispositif ;
chauffer au moins une desdites au moins deux chambres pour distribuer un deuxième volume de liquide hors du dispositif.

5. Procédé selon la revendication 4, comportant en outre un capteur (13) de pression servant à mesurer la pression de gaz à l'intérieur desdites au moins deux chambres.

6. Procédé selon la revendication 4, l'environnement externe étant à pression atmosphérique ambiante ou l'environnement externe étant le liquide à aspirer et à distribuer.

7. Procédé selon la revendication 4, le volume de gaz dans lesdites au moins deux chambres et le conduit étant ≤ 50 µl, ≤ 40 µl, ≤ 30 µl, ≤ 20 µl ou d'environ 20 µl.

8. Procédé selon la revendication 4, le volume de liquide se situant dans la plage d'environ 0,2 à 5 µl.

9. Procédé selon la revendication 4, le volume de liquide étant inférieur à environ ≤ 5 µl ou inférieur à environ ≤ 2 µl.

10. Procédé selon la revendication 4, le différentiel de température étant au moins ≥ 1°C, au moins ≥ 2°C ou au moins ≥ 3°C.

11. Procédé de détermination de la présence ou de la quantité d'un ou plusieurs analytes dans un échantillon, comportant les étapes consistant à :

mettre en place le dispositif doseur selon la revendication 1 ;
placer un échantillon dans un récipient à échantillon ;
aspirer une quantité choisie d'échantillon à partir du récipient ;
distribuer l'échantillon sur un élément de test ;
éventuellement mettre en place un ou plusieurs réactifs ;
faire incuber les éléments récepteurs ; et
relever une mesure des échantillons pour déterminer la présence ou la quantité de l'analyte dans l'échantillon, les éléments de test étant un élément de lame sèche, une cuvette optiquement transparente et / ou un micro-puits revêtu de streptavidine.

# FIG. 1

FIG. 2

# FIG. 3

# FIG. 4

# FIG. 5A

21
Multiple
Thermal
Heater/Cooler

5B          5B

24
Pressure
Sensor

23
Thermistor

# FIG. 5B

22

26

25

27

# FIG. 5C

# FIG. 5D

# FIG. 6A

# FIG. 6B

EP 2 205 358 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 3992158 A
- US 5441895 A
- US 7416700 B
- US 20050042766 A
- US 20030026733 A

- US 09128305 A
- US 5714791 A
- US 6700174 B
- US 7307328 B
- WO 9713283 A